# EUROPEAN PATENT APPLICATION

(11) **EP 2 184 701 A2**
(43) Date of publication of application: **12.05.2010**
(21) Application number: 09154896.6
(22) Date of filing: 11.03.2009
(51) Int. Cl.: G06K 9/34, G06K 9/32

(54) **Automatic word string arranging apparatus and method thereof**

(30) Priority: 05.11.2008 TW 97142694
(71) Applicant: AVerMedia Information, Inc., Chung-Ho City, Taipei Hsien (TW)
(72) Inventor: Sun, Shi-Mu, Taipei Hsien (TW); Yen, Christopher, Taipei Hsien (TW); Liang, Yun-Hui, Taipei Hsien (TW); Kuo, Mei-Jen, Taipei Hsien (TW)
(74) Representative: Lang, Christian

(57) **Abstract**

The present invention discloses a method to automatically arrange word string in a display. The word string includes two words. The method includes the following steps. The first step is to define the positions of the start position and the stop position of strokes of the two words. The second step is to group the start position and the stop position based on a threshold value. The third step is to circle the words based on the grouping result. The final step is to rearrange the two words based on a datum point.

## Description

### Related Applications

This application claims priority to Taiwan Application Serial Number 97142694, filed November 05, 2008, which is herein incorporated by reference.

### Field of the Invention

The present invention relates to a word string arranging apparatus and method thereof, and especially to an automatic word string arranging apparatus and method.

### Background of the Invention

Mouse and keyboard are standard input equipments for computers. However, there are many differences among mouse, keyboard and pen in writing and drawing. Therefore, it is necessary for a novice to spend much time to study how to control mouse and keyboard and to remember the positions of the basic characters in keyboard. Therefore, a digital board is developed for resolving the foregoing problems.

The digital board includes a pen and a sensor board. A user uses the pen to draw in the sensor board. The sensor board can sense the drawing content and transform the content to digital signals to send to a computer to display. However, such input method requires the user to keep a close watch on the display to insure that the display position in the display is correct. It is very inconvenient for a user. Moreover, if the sensitivity of the digital board is not good, the size and the position of the content shown in the display will be different from what the user wants. For example, the user needs a word string arranged in a line shown in the display. However, because of not good sensitivity of the digital board, the word string shown in the display can be arranged at an angle.

Therefore, an apparatus and a method that can resolve the foregoing problems are needed.

### Summary of the Invention

Therefore, the present invention provides an apparatus and a method to automatically arrange word string in the display based on a datum point.

In accordance with the foregoing purpose, the present invention discloses a method to automatically arrange word string in a display. The word string includes two words. The method includes the following steps. The first step is to define the positions of the start position and the stop position of strokes of the two words. The second step is to group the start position and the stop position based on a threshold value. The third step is to circle the words based on the grouping result. The final step is to rearrange the two words based on a datum point.

Moreover, the present invention discloses an apparatus to automatically arrange word string in a display. The word string includes two words. The apparatus includes a selecting module to define the positions of the start position and the stop position of strokes of the two words, a grouping module to group the start position and the stop position based on a threshold value and to circle the words based on the grouping result and an arranging module to rearrange the two words based on a datum point.

Accordingly, the words are divided into a plurality of strokes. Then, these strokes are arranged in the display to constitute the words again based on a datum point. Such apparatus and method can correct the word string from being arranged at an angle to be arranged in a line.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Figure 1 is a word string that is arranged at an angle.
Figure 2 is a flow chart of automatically arranging a word string according to the present invention.
Figure 3 is a word string of figure 1 that is arranged again in a line.
Figure 4 illustrates defined start positions and defined stop positions of strokes of words in the word string.
Figure 5 is a word.
Figure 6A to figure 6B illustrates a method that uses the projected gray level difference to divide word string according to the present invention.
Figure 7 is an apparatus of automatically arranging word string according to the present invention.

### Detailed Description of the Preferred Embodiment

There is no orientation line in a conventional digital board. Therefore, using digital board to input information requires the user to keep a close watch on the display to insure that the display position in the display is correct. It is very inconvenient for a user. Moreover, if the sensitivity of the digital board is not good, the size and the position of the content shown in the display will be different from what the user wants. Therefore, the present invention provides an apparatus and method to automatically arrange the word string to resolve the foregoing problems.

When writing a word, each stroke of the word is sequentially written to form the word. Each stroke has a start position and a stop position. Moreover, a user intentionally leaves a space between two adjacent words for distinguishing each word in a word string. The present invention uses the foregoing features to distinguish range of each word in a word string. Then, the word string is arranged again based on the range.

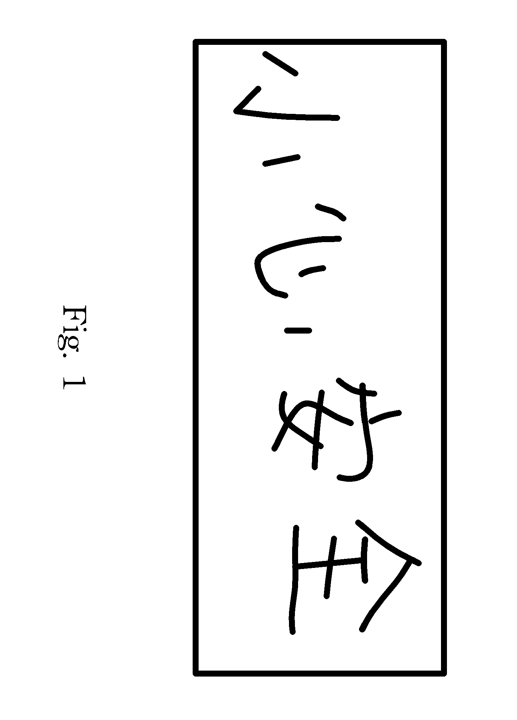

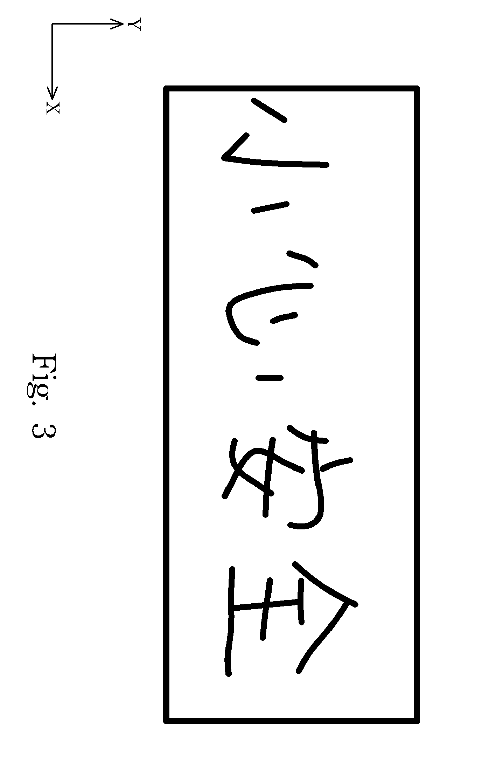

In an embodiment, a user uses an input device to input a word string, 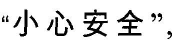 , and displays in a display. An orientation problem causes the word string, 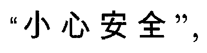 , arranged at an angle as illustrated in figure 1. For correcting this arrangement, the present invention can automatically arrange the word string, 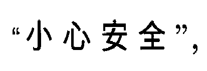 , again to make the lowest position of each word shown in the display have the same position in the Y-direction as illustrated in figure 3.

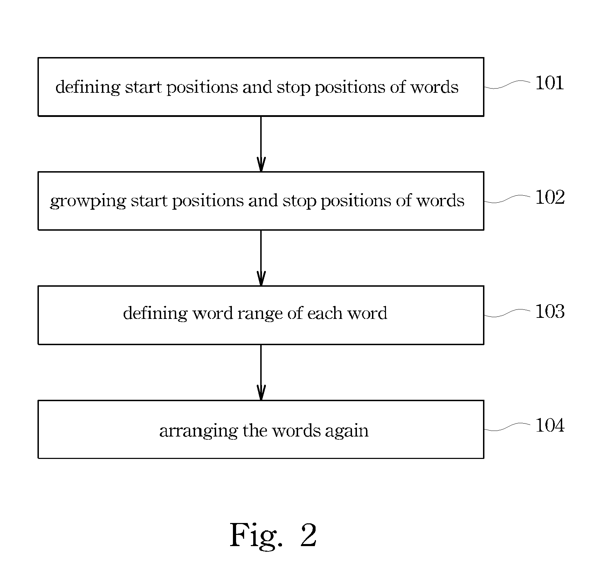

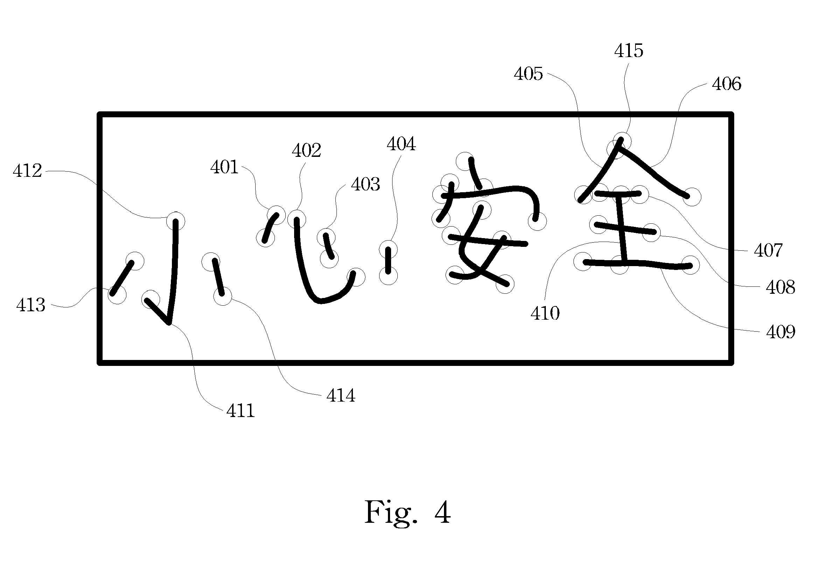

Figure 2 is a flow chart of automatically arranging a word string according to the present invention. In step 101, the positions of the start position and the stop position of strokes of the words are defined. As illustrated in figure 4, when a user uses a pen to write a word in a sensor board, the pen can apply a pressure to the sensor board. The sensor board senses the pressure to orientate the start position of a stroke of the word. When the stroke is finished, the pen leaves the sensor board and the pressure applied by the pen is removed. The sensor board senses the pressure change to orientate the stop position. Because each stroke is distinguished, each stroke is exactly defined by sensing the start position and the stop position. The length of each stroke is calculated according to the start position and the stop position.

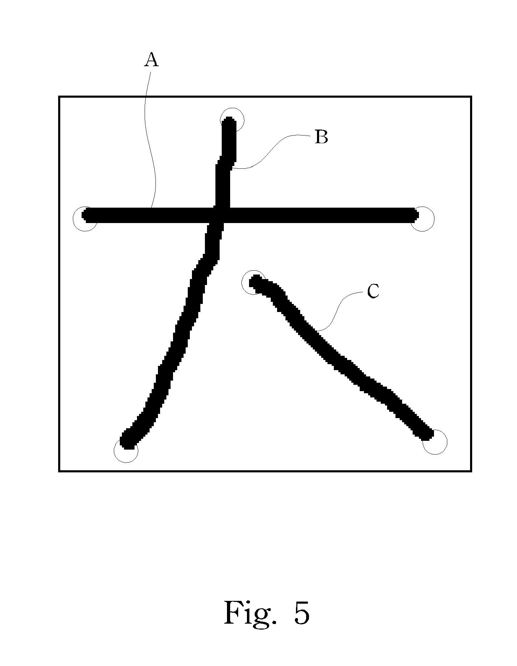

In step 102, adjacent defined positions are grouped. A user intentionally leaves a space between two adjacent words for distinguishing each word in a word string. Typically, the space is half of the range of a word. In an embodiment, the average length of all strokes is defined as the range of a word. The present invention uses this foregoing definition to group the defined positions. These positions in a group represent the start positions or the stop positions of a word. A start position and a stop position that are sequentially defined represents a stroke exists between this start position and this stop position. When the distance between two adjacent strokes is less than half of the average length of all strokes, the two adjacent strokes is determined to belong to same word. For example, the word, 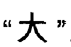 , is illustrated in the figure 5. The step 101 defines the start positions and the stop positions of the word, 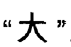 The word, 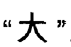 , includes three strokes A, B and C based on the defined start positions and stop positions. Then, the average length of the three strokes A, B and C are calculated. The average length is used as the range in the X direction and in the Y direction of the word, 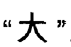 . After the range is determined, the distance between two adjacent strokes is less than half of the range, the two adjacent strokes are determined to belong to same word. Then, these start positions and stop positions forming these strokes are grouped together. Accordingly, the word string, " 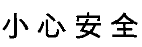 " is grouped into four groups.

On the other hand, if the foregoing determination method can not determine whether or not a stroke should belong to the word, an auxiliary determination method is provided in the following. When a first stroke is surrounded by other strokes that belong to a same word, the first stroke is determined to belong to this word even though the distances among the first stroke and other strokes is larger than half of the range the word occupied therein. For example, in figure 4, the strokes 401, 402 and 404 of the word " 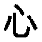 " have been determined to belong to a same word. The stroke 403 is determined to belong to this word " 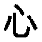 " even though the distances among the stroke 403 and strokes 401, 402 and 404 is larger than half of the range the word " 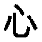 " occupied therein.

In another embodiment, if a first stroke crosses a second stroke and the second stroke follows the first stroke, the first stroke and the second stroke are determined to belong to a same word. For example, the stroke 405 crosses the stroke 406 in the word " 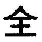 " and the stroke 406 follows the stroke 405, the stroke 405 and the stroke 406 are determined to belong to a same word. Moreover, the stroke 407, 408 and 409 cross the stroke 410 in the word " 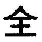 ". Therefore, the stroke 407, 408, 409 and 4109 are determined to belong to a same word.

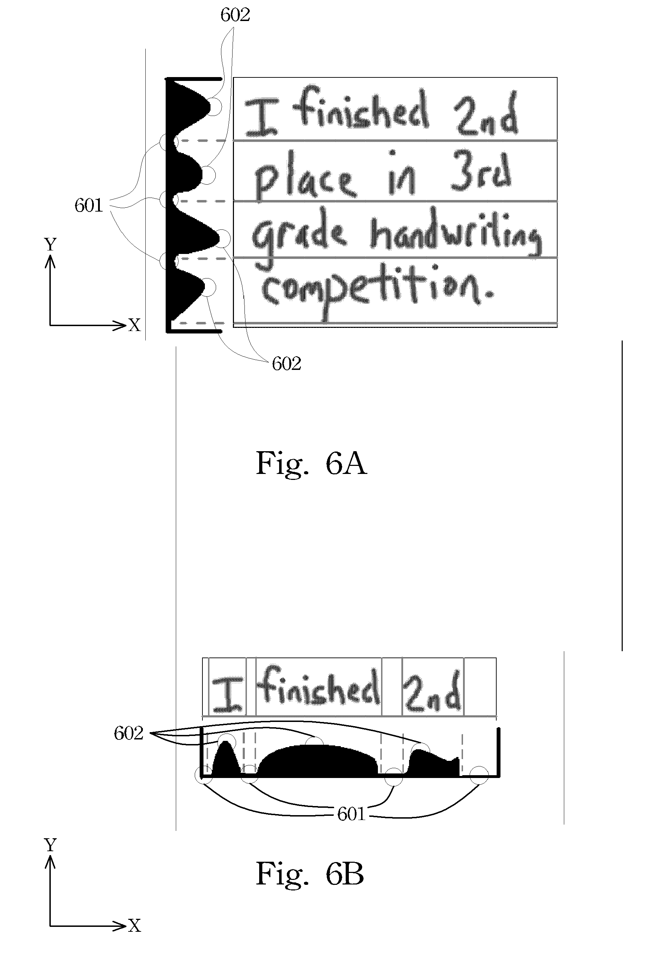

In another embodiment, a projecting method is used to divide a word string. When a word is projected, a gray level projection drawing is formed. Figure 6A shows a paragraph that is divided into a plurality of lines according to a gray-level projection drawing in the X-direction. Figure 6B shows a word string that is divided into a plurality of words according to a gray-level projection drawing in the Y-direction. A wave peak 602 in the projection diagram represents a word exists in corresponding positions, otherwise, a wave trough 601 is shown in the projection diagram. The height of the wave peak 602 and the wave trough 601 are related to the word writing range and word size. A larger writing range causes a wave peak with a higher height value. The larger ratio of the wave peak 602 to the wave trough 601 means the paragraph or the word string has a more obvious dividing relationship between two adjacent lines or two adjacent words. In an embodiment, when the height of the wave trough 601 is less than triple height of the word, the dividing result of the paragraph or the word string is conformed because the paragraph or the word string has a more obvious dividing relationship. For example, if the word has a size of 20 dot, the dividing result of the paragraph or the word string is conformed when the gray level value of the wave trough 601 is less than 60 dot. On the other hand, when the height of the wave trough 601 is larger than triple height of the word, the dividing result of the paragraph or the word string is not conformed. In this case, the projection method is given up. For example, if the word has a size of 20 dot, the dividing result of the paragraph or the word string is not conformed when the wave trough 601 is larger than 60 dot.

Then, step 103 is to circle the words based on the grouping result in step 102. Moreover, a word range is also defined in this step 103 by determining the pixel position of the strokes of the word. For example, in figure 4, the pixel position of the position 411 of the word " 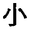 " is determined as the bottom position of the word " 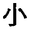 ". The pixel position of the position 412 of the word " 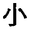 " is determined as the top position of the word " 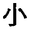 ". The pixel position of the position 413 of the word " 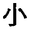 " is determined as the left position of the word " 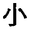 ". The pixel position of the position 414 of the word " 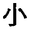 " is determined as the right position of the word " 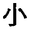 ". The four positions 411, 412, 413 and 414 constitute a rectangular range to be as the range of the word " 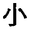 ".

Finally, step 104 is to arrange the words. In this step, the words are arranged again based on the range defined in step 103 and based on a datum point. In an embodiment, the datum point is the lowest position of the words defined in the step 103. For example, in figure 4, the datum point is the pixel position of the position 411 of the word " 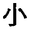 " because the pixel position of the position 411 is the lowest position in the word string. Therefore, when the four words are arranged again, the bottom positions of four words aimed at the pixel position of the position 411 as shown in the figure 3. In another embodiment, the datum point is the pixel position of the position 415 of the word " 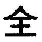 " because the pixel position of the position 415 is the highest position in the word string. Or, the datum point is a defined pixel position. These embodiments do not limit the datum position when this invention is applied.

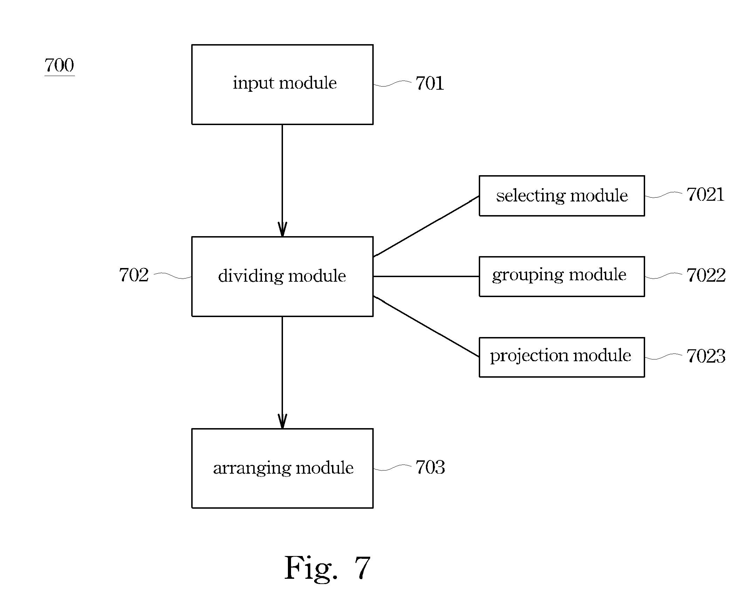

Figure 7 is an apparatus of automatically arranging word string according to the present invention. The arranging word string apparatus 700 includes an input module 701, a dividing module 702 and arranging module 703. The input module 701 provides a user to input a word string. The dividing module 702 divides the word string into a plurality of words. The arranging module 703 arranges the word string again based on a datum point. The dividing module 702 further includes a selecting module 7021 to define the positions of the start position and the stop position of strokes of the two words, a grouping module 7022 to group the start position and the stop position based on a threshold value and to circle the words based on the grouping result. In an embodiment, the grouping module 7022 averages the length of the strokes and determining the two adjacent strokes to belong to a same word when a distance of these two strokes is less than half of the average length. Then, these strokes that are determined to belong to a same word are grouped together.

In another embodiment, the dividing module 702 further includes a projecting module 7023 to project a word string or a paragraph to form a gray level projection drawing. When any word is projected, a wave peak 602 is formed in the projection diagram; otherwise, a wave trough 601 is formed in the projection diagram as shown in the figure 6A. In an embodiment, when the height of the wave trough 601 is less than triple height of the word, the dividing result of the paragraph or the word string is conformed. Then, the grouping module 7022 groups theses positions based on the wave trough 601 to divide the word string. For example, the projection module 7023 projects a word string. If the word has a size of 20 dot, the dividing result of the paragraph or the word string is conformed when the wave trough 601 is less than 60 dot. Then, the grouping module 7022 groups theses positions based on the wave trough 601 to divide the word string.

Accordingly, the words are divided into a plurality of strokes. Then, these strokes are arranged in the display to constitute the words again based on a datum point. Such apparatus and method can correct the word string from being arranged at an angle to be arranged in a line.

While the preferred embodiment of the invention has been illustrated and described, it will be appreciated that various changes can be made therein without departing from the spirit and scope of the invention.

## Claims

1. A method to automatically arrange word string in a display, the word string includes at least two words, wherein each of the two words include at least one stroke, said method comprises the following steps of:
defining start positions and stop positions of strokes of the two words;
grouping the start positions and the stop positions based on a threshold value;
circling the two words respectively based on the grouping result; and
arranging the two words based on a datum point.

2. The method of claim 1, further comprising when a first stroke is surrounded by other strokes, start positions and stop positions of the first stroke and the other strokes are grouped together.

3. The method of claim 1, further comprising when a first stroke crosses a second stroke, the first stroke and the second stroke are grouped together.

4. The method of claim 1, wherein the threshold voltage is equal to half of the average length of the strokes of the two words.

5. The method of claim 4, wherein when a distance of two adjacent strokes is less than the threshold voltage, the start positions and the stop positions of the two adjacent strokes are grouped together.

6. The method of claim 1, wherein the threshold voltage is a height value of a projection on a projection diagram and the height value is less than triple height of the words of the word string.

7. The method of claim 6, wherein when the height value is less than triple height of the word, the word string is divided based on the projection diagram.

8. The method of claim 7, wherein projection diagram includes at least one wave peak region and at least one wave trough region and the word string is divided based on at least one wave trough region.

9. An apparatus to automatically arrange word string in a display, the word string includes at least two words, wherein each of the two word includes at least one stroke, comprising:
a selecting module to define the start positions and the stop positions of strokes of the two words;
a grouping module to group the start positions and the stop positions based on a threshold value and to circle the two words based on a grouping result; and
an arranging module to arrange the two words again based on a datum point.

10. The apparatus of claim 9, wherein when a first stroke is surrounded by other strokes, the grouping module groups the start positions and stop positions of the first stroke and the other strokes.

11. The apparatus of claim 9, wherein when a first stroke crosses a second stroke, the grouping module groups the first stroke and the second stroke.

12. The apparatus of claim 9, wherein the threshold voltage is equal to half of the average length of the strokes of the two words, wherein when a distance of two adjacent strokes is less than the threshold voltage, the grouping module groups the start positions and the stop positions of the two adjacent strokes.

13. The apparatus of claim 9, further comprising a projection module to project the word string to a projection diagram with at least one wave peak region and at least one wave trough region.

14. The apparatus of claim 13, wherein the threshold voltage is a height value of a projection on the projection diagram and the height value is less than triple height of the words of the word string.

15. The apparatus of claim 14, wherein when the height value is less than triple height of the word, the projection module divides the word string based on the wave trough region on the projection diagram.
